# EUROPEAN PATENT SPECIFICATION

(11) **EP 2 624 532 B1**
(45) Date of publication and mention of the grant of the patent: **08.11.2017**
(21) Application number: 12199142.6
(22) Date of filing: 21.12.2012
(51) Int. Cl.: H04M 1/725, G06F 3/0486, G06F 3/0488

(54) **Mobile terminal and electronic communication method using the same**
Mobiles Endgerät und elektronisches Kommunikationsverfahren damit
Terminal mobile et procédé de communication électronique l'utilisant

(30) Priority: 06.02.2012 KR 20120011991
(43) Date of publication of application: 07.08.2013
(73) Proprietor: LG Electronics, Inc., Seoul, 150-721 (KR)
(72) Inventor: Jung, Kwanju, Seoul (KR); Kim, Younghoon, Seoul (KR); Lee, Kunho, Gangnam-gu, Seoul (KR)
(74) Representative: Cabinet Plasseraud

(56) References cited:
- EP-A1- 2 073 512
- EP-A2- 2 306 307
- WO-A2-2004/075169
- US-A- 5 533 110
- US-A1- 2010 216 448
- "Oracle Communicator - User's Guide", , 31 July 2008 (2008-07-31), XP055062667, Retrieved from the Internet: URL:http://docs.oracle.com/cd/E12752_01/do c.1013/e12748.pdf [retrieved on 2013-05-13]

## Description

### RELATED APPLICATION

### BACKGROUND OF THE INVENTION

### 1. Field of the invention

The present disclosure relates to a mobile terminal capable of data communication using wireless signals and a data communication method using the same.

### 2. Description of the related art

Terminals can be classified into a mobile terminal and a stationary terminal based on its mobility. Furthermore, the mobile terminal can be further classified into a handheld terminal and a vehicle mount terminal based on whether or not it can be directly carried by a user.

As it becomes multifunctional, the terminal can be allowed to capture still images or moving images, play music or video files, play games, receive broadcast and the like, so as to be implemented as an integrated multimedia player. Moreover, the improvement of the terminal may be taken into consideration in the aspect of structure or software to support and enhance the function of the terminal.

As the function of the terminal has been enhanced, the terminal supports a function for expanding the function of the terminal through communication with an electronic device located at the outside. Meanwhile, it has a difficulty that a complicated authentication procedure such as entering a password should be carried out to allow the terminal to be paired with an external device.

The document EP 2 073 512 discloses a mobile terminal including a wireless communication unit for searching for wireless devices for pairing with the mobile terminal, a controller for determining a priority of each of the searched wireless devices according to a specific condition and a display unit for displaying the searched wireless devices.

The document EP 2 306 307 discloses a terminal apparatus including a display unit displaying an execution screen of a shared application, reflecting on a display operations performed by multiple users as operations performed on one application.

The document WO 2004/075169 discloses a user interface concept for wireless ad hoc content sharing between portable devices referred to as portable content containers.

### SUMMARY OF THE INVENTION

An object of the present disclosure is to provide a mobile terminal capable of providing a user interface for allowing a user to intuitively apply a control command associated with the pairing of an external electronic device and a data communication method using the same.

Another object of the present disclosure is to provide a mobile terminal capable of providing progressive information associated with data communication with an external electronic device to a user in an easily understandable manner and a data communication method using the same.

In order to accomplish the foregoing objective, a data communication method according to claim 1 is provided. Further embodiments are disclosed in dependent claims 2 to 5.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating a mobile terminal according to an embodiment of the present disclosure;
FIGS. 2A and 2B are front perspective views illustrating an example of a mobile terminal according to an embodiment of the present disclosure;
FIGS. 3A and 3B are conceptual views illustrating a communication system in which a mobile terminal associated with the present disclosure can be operated.
FIG. 4 is a flow chart for explaining a method of allowing a mobile terminal to recognize an external electronic device according to an embodiment disclosed in the present disclosure;
FIGS. 5A, 5B and 6 are conceptual views for explaining the flow chart illustrated in FIG. 4;
FIGS. 7 and 8 are conceptual views for explaining a method of displaying an image object in a mobile terminal according to an embodiment disclosed in the present disclosure;
FIG. 9 is a conceptual view for explaining a method of selecting data to be transmitted in a mobile terminal according to an embodiment disclosed in the present disclosure;
FIG. 10 is a flow chart for explaining a data communication method using a mobile terminal according to an embodiment disclosed in the present disclosure;
FIGS. 11A and 11B are conceptual views illustrating an example of a flow chart for the data communication method illustrated in FIG. 10;
FIGS. 12A and 12B are conceptual views for explaining a method of starting data communication in a data communication method using a mobile terminal according to an embodiment disclosed in the present disclosure;
FIGS. 13A, 13B, 13C, 13D and 13E are conceptual views for explaining a method of displaying a screen during data transmission in a mobile terminal according to an embodiment disclosed in the present disclosure;
FIGS. 14A and 14B are conceptual views for explaining a method of transmitting data by setting a priority in a mobile terminal according to an embodiment disclosed in the present disclosure;
FIG. 15 is a conceptual view for explaining a method of displaying a screen during data transmission in a data communication method using a mobile terminal according to an embodiment disclosed in the present disclosure; and
FIGS. 16A and 16B are conceptual views for explaining a method of displaying a screen for data transmission in a data communication method using a mobile terminal according to an embodiment disclosed in the present disclosure.

### DETAILED DESCRIPTION OF THE INVENTION

Hereinafter, the embodiments disclosed herein will be described in detail with reference to the accompanying drawings, and the same or similar elements are designated with the same numeral references regardless of the numerals in the drawings and their redundant description will be omitted. A suffix "module" or "unit" used for constituent elements disclosed in the following description is merely intended for easy description of the specification, and the suffix itself does not give any special meaning or function. In describing the embodiments disclosed herein, moreover, the detailed description will be omitted when a specific description for publicly known technologies to which the invention pertains is judged to obscure the gist of the present invention. Also, it should be noted that the accompanying drawings are merely illustrated to easily explain the invention, and therefore, they should not be construed to limit it. A mobile terminal disclosed herein may include a portable phone, a smart phone, a laptop computer, a digital broadcast terminal, a personal digital assistant (PDA), a portable multimedia player (PMP), a navigation, a slate PC, a tablet PC, an ultra book and the like. However, it would be easily understood by those skilled in the art that a configuration according to the following description may be applicable to a stationary terminal such as a digital TV, a desktop computer, and the like, excluding constituent elements particularly configured for mobile purposes.

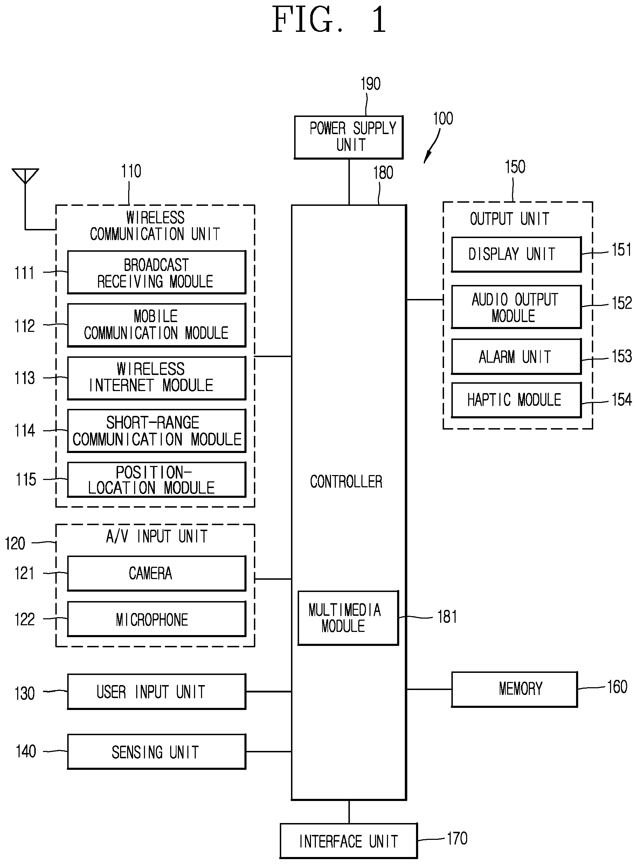

FIG. 1 is a block diagram illustrating a mobile terminal according to an embodiment disclosed herein.

The mobile terminal 100 may include a wireless communication unit 110, an audio/video (AN) input unit 120, a user input unit 130, a sensing unit 140, an output unit 150, a memory 160, an interface unit 170, a controller 180, a power supply unit 190, and the like. However, the constituent elements as illustrated in FIG. 1 are not necessarily required, and the mobile terminal may be implemented with greater or less number of elements than those illustrated elements.

Hereinafter, the constituent elements will be described in sequence.

The wireless communication unit 110 typically includes one or more elements allowing radio communication between the mobile terminal 100 and a wireless communication system, or allowing radio communication between radio communication the mobile terminal 100 and a network in which the mobile terminal 100 is located. For example, the wireless communication unit 110 may include a broadcast receiving module 111, a mobile communication module 112, a wireless Internet module 113, a short-range communication module 114, a location information module 115, and the like.

The broadcast receiving module 111 receives broadcast signals and/or broadcast associated information from an external broadcast management server through a broadcast channel.

The broadcast channel may include a satellite channel and/or a terrestrial channel. The broadcast management server may mean a server that generates and transmits a broadcast signal and/or broadcast associated information or a server that receives a previously generated broadcast signal and/or broadcast associated information and transmits to the mobile terminal 100. The broadcast signal may include a TV broadcast signal, a radio broadcast signal and a data broadcast signal as well as a broadcast signal in a form that a data broadcast signal is coupled to the TV or radio broadcast signal.

The broadcast associated information may mean information regarding a broadcast channel, a broadcast program, a broadcast service provider, and the like. The broadcast associated information may also be provided through a mobile communication network, and in this case, the broadcast associated information may be received by the mobile communication module 112.

The broadcast associated information may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may receive a broadcast signal using various types of broadcast systems. In particular, the broadcast receiving module 111 may receive a digital broadcast signal using a digital broadcast system such as digital multimedia broadcasting-terrestrial (DMB-T), digital multimedia broadcasting-satellite (DMB-S), media forward link only (MediaFLO), digital video broadcast-handheld (DVB-H), integrated services digital broadcast-terrestrial (ISDB-T), and the like. The broadcast receiving module 111 is, of course, configured to be suitable for every broadcast system that provides a broadcast signal as well as the above-mentioned digital broadcast systems.

The broadcast signal and/or broadcast-associated information received through the broadcast receiving module 111 may be stored in the memory 160.

The mobile communication module 112 transmits and/or receives a radio signal to and/or from at least one of a base station, an external terminal and a server over a mobile communication network. Here, the radio signal may include a voice call signal, a video call signal and/or various types of data according to text and/or multimedia message transmission and/or reception.

The mobile communication module 112 may be configured to implement an video communication mode and a voice communication mode. The video communication mode refers to a configuration in which communication is made while viewing an image of the counterpart, and the voice communication mode refers to a configuration in which communication is made without viewing an image of the counterpart. The mobile communication module 112 may be configured to transmit or receive at least one of voice or image data to implement the video communication mode and voice communication mode.

The wireless Internet module 113 means a module for supporting wireless Internet access. The wireless Internet module 113 may be built-in or externally installed to the mobile terminal 100. Here, it may be used a wireless Internet access technique including a WLAN (Wireless LAN), Wi-Fi, Wibro (Wireless Broadband), Wimax (World Interoperability for Microwave Access), HSDPA (High Speed Downlink Packet Access), and the like.

The short-range communication module 114 is a module for supporting a short-range communication. Here, it may be used a short-range communication technology including Bluetooth, Radio Frequency IDentification (RFID), Infrared Data Association (IrDA), Ultra WideBand (UWB), ZigBee, and the like.

The location information module 115 is a module for checking or acquiring a location of the mobile terminal, and there is a GPS module as a representative example.

Referring to FIG. 1, the A/V(audio/video) input unit 120 receives an audio or video signal, and the A/V (audio/video) input unit 120 may include a camera 121 and a microphone 122. The camera 121 processes a image frame, such as still picture or video, obtained by an image sensor in a video phone call or image capturing mode. The processed image frame may be displayed on a display unit 151.

The image frames processed by the camera 121 may be stored in the memory 160 or transmitted to an external device through the wireless communication unit 110. Two or more cameras 121 may be provided according to the use environment of the mobile terminal.

The microphone 122 receives an external audio signal through a microphone in a phone call mode, a recording mode, a voice recognition mode, and the like, and processes the audio signal into electrical voice data. The processed voice data may be converted and outputted into a format that is transmittable to a mobile communication base station through the mobile communication module 112 in the phone call mode. The microphone 122 may implement various types of noise canceling algorithms to cancel noise generated in a procedure of receiving the external audio signal.

The user input unit 130 may generate input data to control an operation of the terminal. The user input unit 130 may be configured by including a keypad, a dome switch, a touch pad (pressure/capacitance), a jog wheel, a jog switch, and the like.

The sensing unit 140 detects a current status of the mobile terminal 100 such as an opened or closed state of the mobile terminal 100, a location of the mobile terminal 100, an orientation of the mobile terminal 100, and the like, and generates a sensing signal for controlling the operation of the mobile terminal 100. For example, when the mobile terminal 100 is a slide phone type, it may sense an opened or closed state of the slide phone. Furthermore, the sensing unit 140 takes charge of a sensing function associated with whether or not power is supplied from the power supply unit 190, or whether or not an external device is coupled to the interface unit 170.

The output unit 150 is configured to provide an output for audio signal, video signal, or alarm signal, and the output unit 150 may include the display unit 151, an audio output module 152, an alarm unit 153, a haptic module 154, and the like.

The display unit 151 may display (output) information processed in the mobile terminal 100. For example, when the mobile terminal 100 is in a phone call mode, the display unit 151 may display a User Interface (UI) or a Graphic User Interface (GUI) associated with a call. When the mobile terminal 100 is in a video call mode or image capturing mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of those displays may be configured with a transparent or optical transparent type to allow viewing of the exterior through the display unit, which may be called transparent displays. An example of the typical transparent displays may include a transparent LCD (TOLED), and the like. Under this configuration, a user can view an object positioned at a rear side of a terminal body through a region occupied by the display unit 151 of the terminal body.

Two or more display units 151 may be implemented according to a configured aspect of the mobile terminal 100. For instance, a plurality of the display units 151 may be arranged on one surface to be spaced apart from or integrated with each other, or may be arranged on different surfaces.

When the display unit 151 and a touch sensitive sensor (hereinafter, referred to as a "touch sensor") have an interlayer structure (hereinafter, referred to as a "touch screen"), the display unit 151 may be used as an input device rather than an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

When there is a touch input to the touch sensor, the corresponding signals are transmitted to a touch controller (not shown). The touch controller processes the received signals, and then transmits corresponding data to the controller 180. Accordingly, the controller 180 may sense which region of the display unit 151 has been touched.

Referring to FIG. 1, a proximity sensor 141 may be arranged at an inner region of the mobile terminal 100 covered by the touch screen, or near the touch screen. The proximity sensor indicates a sensor to sense presence or absence of an object approaching to a surface to be sensed, or an object disposed near a surface to be sensed, by using an electromagnetic field or infrared rays without a mechanical contact. The proximity sensor has a longer lifespan and a more enhanced utility than a contact sensor.

The examples of the proximity sensor may include an optical transmission type photoelectric sensor, a direct reflective type photoelectric sensor, a mirror reflective type photoelectric sensor, a highfrequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of convenience of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor senses proximity touch, and proximity touch patterns (e.g., distance, direction, speed, time, position, moving status, etc.). Information relating to the sensed proximity touch and the sensed proximity touch patterns may be output onto the touch screen.

The audio output module 152 may output audio data received from the wireless communication unit 110 or stored in the memory 160, in a call-receiving mode, a call-placing mode, a recording mode, a voice recognition mode, a broadcast reception mode, and so on. The audio output module 152 may output audio signals relating to functions performed in the mobile terminal 100, e.g., sound alarming a call received or a message received, and so on. The audio output module 152 may include a receiver, a speaker, a buzzer, and so on.

The alarm 153 outputs signals notifying occurrence of events from the mobile terminal 100. The events occurring from the mobile terminal 100 may include call received, message received, key signal input, touch input, and so on. The alarm 153 may output not only video or audio signals, but also other types of signals such as signals notifying occurrence of events in a vibration manner. Since the video or audio signals can be output through the display unit 151 or the audio output unit 152, the display unit 151 and the audio output module 152 may be categorized into a part of the alarm 153.

The haptic module 154 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 154 may generate various tactile effects, including not only vibration, but also arrangement of pins vertically moving with respect to a skin being touched, air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 may be configured to transmit tactile effects through a user's direct contact, or a user's muscular sense using a finger or a hand. The haptic module 154 may be implemented in two or more in number according to the configuration of the mobile terminal 100.

The memory 160 may store a program for processing and controlling the controller 180. Alternatively, the memory 160 may temporarily store input/output data (e.g., phonebook data, messages, audios, still images, videos, and the like). Also, the memory 160 may store data related to various patterns of vibrations and sounds outputted upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the mobile terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as 'identification device') may be implemented in a type of smart card. Hence, the identification device can be coupled to the mobile terminal 100 via a port.

Also, the interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal has accurately been mounted to the cradle.

The controller 180 typically controls the overall operations of the mobile terminal 100. For example, the controller 180 performs the control and processing associated with telephony calls, data communications, video calls, and the like. The controller 180 may include a multimedia module 181 for reproducing multimedia data. The multimedia module 181 may be implemented in an integrated manner within the controller 180 or may be implemented in a separate manner from the controller 180.

Furthermore, the controller 180 can perform a pattern recognition processing so as to recognize writing or drawing input on the touch screen as text or image.

Furthermore, the controller 180 may implement a lock state for limiting the user's control command input to applications when the state of the mobile terminal satisfies the prescribed condition. Furthermore, the controller 180 may control a lock screen displayed in the lock state based on a touch input sensed over the display unit 151 (hereinafter, referred to as a "touch screen") in the lock state.

The power supply unit 190 receives external power and internal power under the control of the controller 180 to provide power required by various components.

Various embodiments described herein may be implemented in a medium that can be read by a computer or similar device using software, hardware, or any combination thereof.

For hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electrical units designed to perform the functions described herein. In some cases, such embodiments may be implemented in the controller 180 itself.

For software implementation, the embodiments such as procedures or functions may be implemented together with separate software modules. The software modules may perform at least one function or operation described herein.

Software codes can be implemented by a software application written in any suitable programming language. The software codes may be stored in the memory 160 and executed by the controller 180.

Hereinafter, a mobile terminal according to an embodiment of the present disclosure described in FIG. 1, or a mobile terminal disposed with constituent elements of the mobile terminal, or the structure of a mobile terminal will be described.

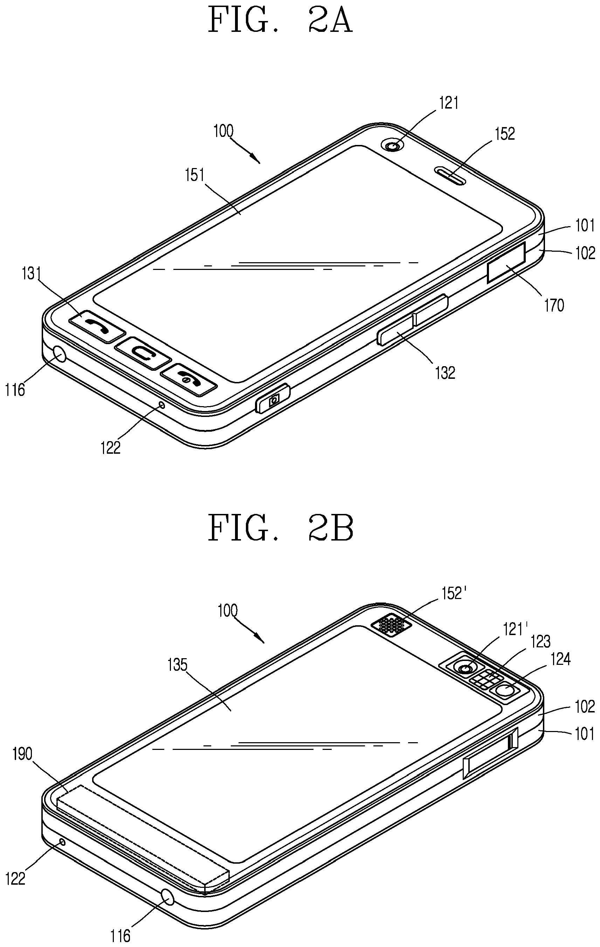

FIG. 2A is a front perspective view illustrating an example of a mobile terminal according to an embodiment of the present disclosure or an example of a mobile terminal, and FIG. 2B is a rear perspective view illustrating the mobile terminal in FIG. 2A.

The mobile terminal 100 disclosed herein is provided with a bar-type terminal body. However, the present invention is not only limited to this type of terminal, but also applicable to various structures of terminals such as slide type, folder type, swivel type, swing type, and the like, in which two and more bodies are combined with each other in a relatively movable manner.

According to the drawing, the terminal body 100 (hereinafter, referred to as a "body") may include a front surface, a lateral surface, and a rear surface. Furthermore, the body may include both ends thereof formed along the length direction.

The body 100 includes a case (casing, housing, cover, etc.) forming an appearance of the terminal. In this embodiment, the case may be divided into a front surface (hereinafter, referred to as a "front case") 101 and a rear surface (hereinafter, referred to as a "rear case") 102. Various electronic components may be incorporated into a space formed between the front case 101 and rear case 102. At least one middle case may be additionally disposed between the front case 101 and the rear case 102.

The cases may be formed by injection-molding a synthetic resin or may be also formed of a metal material such as stainless steel (STS), titanium (Ti), or the like.

A display unit 151, an audio output module 152, a camera 121, a user input unit 130 (130/131, 132), a microphone 122, an interface 170, and the like may be arranged on the terminal body 100, mainly on the front case 101.

The display unit 151 occupies a most portion of the front case 101. The audio output unit 152 and the camera 121 are disposed on a region adjacent to one of both ends of the display unit 151, and the user input unit 131 and the microphone 122 are disposed on a region adjacent to the other end thereof. The user interface 132 and the interface 170, and the like, may be disposed on a lateral surface of the front case 101 and the rear case 102. On the contrary, the microphone 122 may be disposed at the other end of the body 100.

The user input unit 130 is manipulated to receive a command for controlling the operation of the portable terminal 100, and may include a plurality of manipulation units 131, 132. The manipulation units 131, 132 may be commonly designated as a manipulating portion, and any method may be employed if it is a tactile manner allowing the user to perform manipulation with a tactile feeling.

The content inputted by the manipulation units 131, 132 may be set in various ways. For example, the first manipulation unit 131 may receive a command, such as start, end, scroll, or the like, and the second manipulation unit 132 may receive a command, such as controlling a volume level being outputted from the audio output unit 152, or switching it into a touch recognition mode of the display unit 151.

Referring to FIG. 2B, an audio output unit 152' may be additionally disposed on a rear surface, namely, a rear case 102, of the terminal body. The audio output unit 152' together with the audio output unit 152 (refer to FIG. 2A) can implement a stereo function, and it may be also used to implement a speaker phone mode during a phone call.

Furthermore, a power supply unit 190 for supplying power to the mobile terminal 100 may be mounted on a rear surface of the terminal body. The power supply unit 190 may be configured so as to be incorporated in the terminal body, or directly detachable from the outside of the terminal body.

Furthermore, a touch pad 135 for detecting a touch may be additionally mounted on the rear case 102. The touch pad 135 may be configured in an optical transmission type similarly to the display unit 151. In this case, if the display unit 151 is configured to output visual information from both sides of the display unit 151, then the visual information may be also recognized through the touch pad 135. The information being outputted from the both sides thereof may be controlled by the touch pad 135. In addition, a display may be additionally mounted on the touch pad 135, and a touch screen may be also disposed on the rear case 102.

Furthermore, a camera 121' may be additionally mounted on the rear case 102 of the terminal body. The camera 121' has an image capturing direction, which is substantially opposite to the direction of the camera 121 (refer to FIG. 2A), and may have different pixels from those of the first video input unit 121.

For example, that the camera 121 may preferably have a relatively small number of pixels enough not to cause a difficulty when the user captures his or her own face and sends it to the other party during a video call or the like, and the camera 121' has a relatively large number of pixels since the user often captures a general object that is not sent immediately. The cameras 121' may be provided in the terminal body 100 in a rotatable and popupable manner.

Furthermore, a flash 123 and a mirror 124 may be additionally disposed adjacent to the camera 121'. The flash 123 illuminates light toward an object when capturing the object with the camera 121'. The mirror allows the user to look at his or her own face, or the like, in a reflected way when capturing himself or herself (in a self-portrait mode) by using the camera 121'.

Furthermore, an audio output unit 152' may be additionally disposed on a rear surface of the terminal body. The audio output unit 152' together with the audio output unit 152 (refer to FIG. 2A) can implement a stereo function, and it may be also used to implement a speaker phone mode during a phone call.

Furthermore, a power supply unit 190 for supplying power to the portable terminal 100 may be mounted on a rear surface of the terminal body. The power supply unit 190 may be configured so as to be incorporated in the terminal body, or directly detachable from the outside of the terminal body.

A touch pad 135 for detecting a touch may be additionally mounted on the rear case 102. The touch pad 135 may be configured in an optical transmission type similarly to the display unit 151. In this case, if the display unit 151 is configured to output visual information from both sides of the display unit 151, then the visual information may be also recognized through the touch pad 135. The information being outputted from the both sides thereof may be controlled by the touch pad 135. In addition, a display may be additionally mounted on the touch pad 135, and a touch screen may be also disposed on the rear case 102.

The touch pad 135 operates in a reciprocal relation to the display unit 151 of the front case 101. The touch pad 135 may be disposed in parallel on a rear side of the display unit 151. The touch pad 135 may have the same or a smaller size as or than that of the display unit 151.

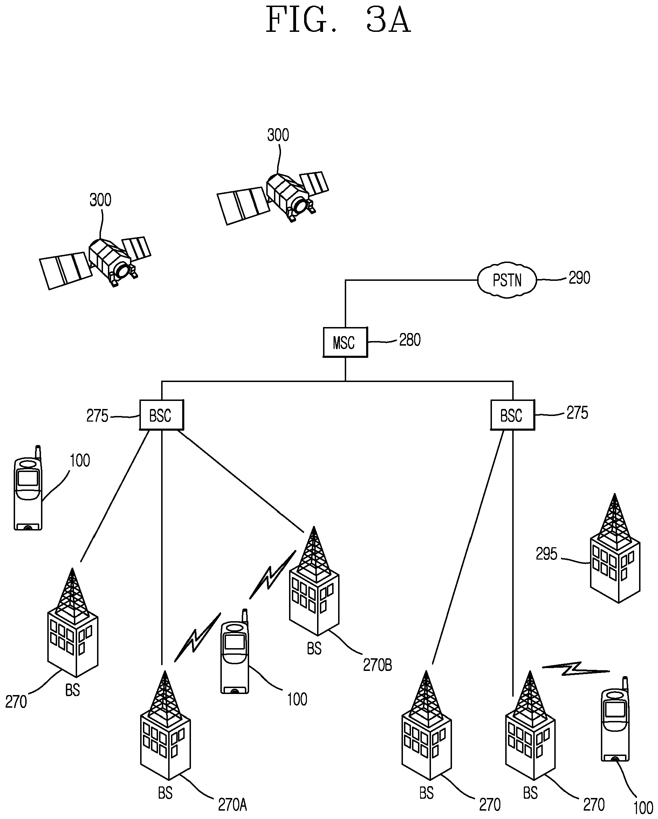

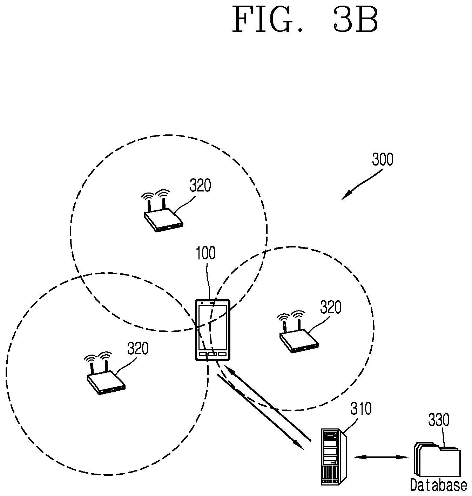

On the other hand, FIGS. 3A and 3B are conceptual views illustrating a communication system in which the mobile terminal 100 according to the present disclosure can be operated.

First, referring to FIG. 3A, the communication system may use different wireless interfaces and/or physical layers. For example, wireless interfaces that can be used by the communication system may include, frequency division multiple access (FDMA), time division multiple access (TDMA), code division multiple access (CDMA), universal mobile telecommunications system (UMTS) (particularly, long term evolution (LTE)), global system for mobile communications (GSM), and the like. Hereinafter, for the sake of convenience of explanation, the description disclosed herein will be limited to CDMA. However, the present invention may be also applicable to all communication systems including a CDMA wireless communication system.

As illustrated in FIG. 3A, a CDMA wireless communication system may include a plurality of terminals 100, a plurality of base stations (BSs) 270, a plurality of base station controllers (BSCs) 275, and a mobile switching center (MSC) 280. The MSC 280 may interface with a Public Switched Telephone Network (PSTN) 290, and the MSC 280 may also interface with the BSCs 275. The BSCs 275 may be connected to the BSs 270 via backhaul lines. The backhaul lines may be configured in accordance with at least any one of E1/T1, ATM, IP, PPP, Frame Relay, HDSL, ADSL, or xDSL, for example. Accordingly, the system illustrated in FIG. 3A may include a plurality of BSCs 275.

Each of the BSs 270 may include at least one sector, each sector having an omni-directional antenna or an antenna indicating a particular radial direction from the base station 270. Alternatively, each sector may include two or more antennas with various forms. Each of the BSs 270 may be configured to support a plurality of frequency assignments, each frequency assignment having a particular spectrum (for example., 1.25 MHz, 5 MHz).

The intersection of a sector and frequency assignment may be referred to as a CDMA channel. The BSs 270 may also be referred to as Base Station Transceiver Subsystems (BTSs). In this case, the term "base station" may refer collectively to a BSC 275, and at least one BS 270. The base stations may also indicate "cell sites". Alternatively, individual sectors for a specific BS 270 may also be referred to as a plurality of cell sites.

As illustrated in FIG. 3A, the Broadcasting Transmitter (BT) 295 may transmit broadcasting signals to the mobile terminals 100 being operated within the system. The broadcast receiving module 111 as illustrated in FIG. 1 may be provided in the mobile terminal 100 to receive broadcast signals transmitted by the BT 295.

In addition, FIG. 3A illustrates several global positioning system (GPS) satellites 300. Such satellites 300 facilitate locating at least one of a plurality of mobile terminals 100. Though two satellites are illustrated in FIG. 3, location information may be obtained with a greater or fewer number of satellites. The location information module 115 as illustrated in FIG. 1 may cooperate with the satellites 300 to obtain desired location information. However, other types of position detection technology, all types of technologies capable of tracing the location may be used in addition to a GPS location technology. At least one of the GPS satellites 300 may alternatively or additionally provide satellite DMB transmissions.

During a typical operation of the wireless communication system, the BS 270 may receive reverse-link signals from various mobile terminals 100. At this time, he mobile terminals 100 may perform calls, message transmissions and receptions, and other communication operations. Each reverse-link signal received by a specific base station 270 may be processed within that specific base station 270. The processed resultant data may be transmitted to an associated BSC 275. The BSC 275 may provide call resource allocation and mobility management functions including systemization of soft handoffs between the base stations 270. The BSCs 275 may also transmit the received data to the MSC 280, which provides additional transmission services for interfacing with the PSTN 290. Similarly, the PSTN 290 may interface with the MSC 280, and the MSC 280 may interface with the BSCs 275, and the BSCs 275 may also control the BSs 270 to transmit forward-link signals to the mobile terminals 100.

Next, a method of obtaining the location information of the terminal using a Wi-FI Positioning System (WPS) will be described with reference to FIG. 3B.

The Wi-FI Positioning System (WPS) denotes a wireless local area network (WLAN) based positioning technology using Wi-Fi.

For example, when the location information of the terminal 100 is requested to the Wi-FI positioning system 300, the Wi-FI positioning system 300 extracts the information of wireless APs 310, 320, 330 being accessed to the terminal 100 from the terminal 100.

Here, the extracted information of the wireless AP may be at least one of MAC address, SSID, channel, signal strength, and noise strength.

Furthermore, the Wi-FI positioning system 300 compares information contained in a previously established database 350 with the extracted APs 310, 320, 330 to extract the location information of the terminal 100. Furthermore, the extracted location information is transmitted to the terminal 100, thereby allowing the terminal 100 to acquire location information.

On the other hand, the Wi-FI positioning system 300 may collect the information (SSID, MAC address, channel, signal strength, noise strength, etc.) of arbitrary wireless APs disposed at different locations, thereby establishing the database 350.

Furthermore, the Wi-FI positioning system 300 matches the information of an arbitrary wireless AP to a location value of the position at which the information of the wireless AP is collected, thereby establishing the database 350. Here, a location value of the position at which the information of the wireless AP is collected may be collected using GPS.

As described above, since the database 350 of the Wi-FI positioning system 300 is matched to wireless AP information and a location value corresponding to the wireless AP, the Wi-FI positioning system 300 can search wireless AP information corresponding to the information of the wireless AP collected at the terminal 100, and extract a location value matched to the searched wireless AP information, thereby tracing the location of the terminal 100.

Furthermore, when an external electronic device capable of data communication is recognized through a wireless signal at a mobile terminal capable of containing at least one of the foregoing constituent elements, an image object is displayed on the display unit 151. Furthermore, the controller 180 controls the wireless communication unit 110 to data communication with the recognized external electronic device when a touch gesture for allowing pairing with the external electronic device is applied to the image object.

Here, the external electronic device may be various kinds of electronic devices including a wireless communication module (or wireless communication protocol) capable of wireless communication with a mobile terminal according to the present disclosure using at least one of Wireless-Fidelity (Wi-Fi), Digital Living Network Alliance (DLNA), Near Field Communication (NFC), BlueTooth (BT) and Wi-Fi Direct communication schemes. As an example of the external electronic device, the external electronic device may include a portable phone, a smart phone, a laptop computer, a digital broadcast terminal, a personal digital assistant (PDA), a portable multimedia player (PMP), a navigation, a slate PC, a tablet PC, an ultra book, a smart TV, and the like.

When an external electronic device is recognized through a wireless signal using at least one of Wireless-Fidelity (Wi-Fi), Digital Living Network Alliance (DLNA), Near Field Communication (NFC), BlueTooth (BT) and Wi-Fi Direct communication schemes, the controller 180 monitors a touch gesture applied to an image object displayed on the display unit 151. Furthermore, as a result of the monitoring, when the image object is moved in a preset direction by a preset length or into a preset region by the touch gesture, the controller 180 controls the wireless communication unit 110 to enable data communication with the recognized external electronic device. In other words, the controller 180 allows the external electronic device to access to the wireless communication unit 110 based on a touch gesture on the image object.

Meanwhile, here, "accessing" to an external electronic device may be also be expressed as "pairing" with an electronic device, and it denotes a state that information can be transmitted between the terminal 100 and the external electronic device, in other words, being connected to transmit valid data. Meanwhile, when pairing is rejected by the external electronic device even if a touch gesture is applied to an image object displayed on the display unit of the mobile terminal according to an embodiment of the present disclosure to enable data communication with the external electronic device, pairing may not be implemented between the external electronic device and the mobile terminal.

As described above, a mobile terminal according to the present disclosure may generate a control command regarding whether to be paired with an external electronic device using an image object displayed on the terminal. The user can intuitively determine that an external electronic device has been recognized through an image object displayed on the terminal, and control whether to be paired with an external electronic device through a touch to the image object, thereby reducing a burden that pairing should be allowed through a separate setting window.

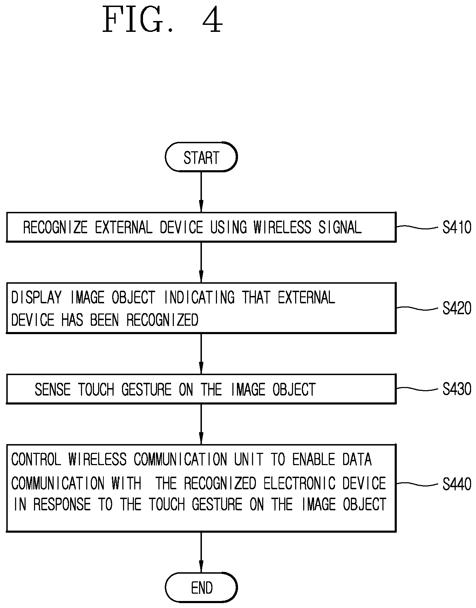

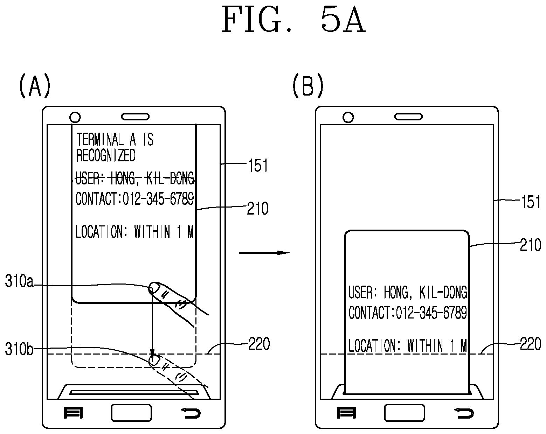

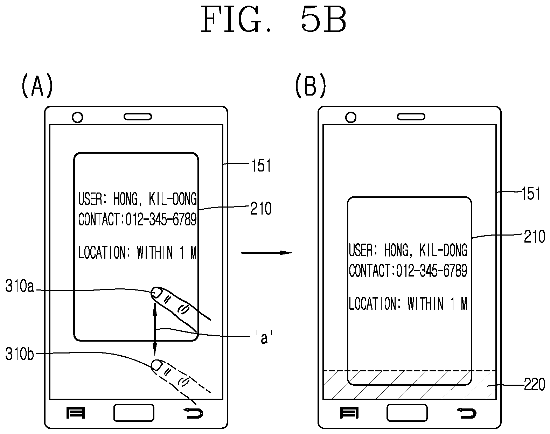

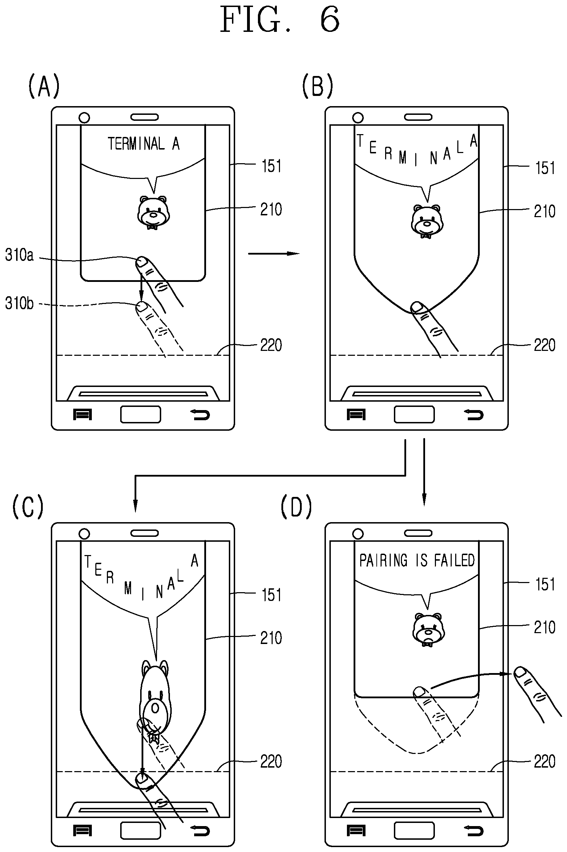

Hereinafter, a method of allowing pairing with an external electronic device using an image object in a mobile terminal associated with the present disclosure will be described with reference to FIGS. 4, 5A, 5B, and 6. FIG. 4 is a flow chart for explaining a method of allowing a mobile terminal to recognize an external electronic device according to an embodiment disclosed in the present disclosure, and FIGS. 5A, 5B and 6 are conceptual views for explaining the flow chart illustrated in FIG. 4.

First, the wireless communication unit 110 (refer to FIG. 1) of a mobile terminal according to an embodiment of the present disclosure recognizes an external electronic device using a wireless signal (S410).

The wireless communication unit 110 can recognize an external electronic device using at least one of Wireless-Fidelity (Wi-Fi), Digital Living Network Alliance (DLNA), Near Field Communication (NFC), BlueTooth (BT) and Wi-Fi Direct communication schemes.

When an external electronic device is recognized by the wireless communication unit 110, the controller 180 (refer to FIG. 1) displays an image object indicating that the external electronic device has been recognized on the display unit 151 (S420).

The controller 180 displays an image object 210 in a region on the display unit 151 as illustrated in FIG. 5A.

The shape of the image object 210 may be a rectangular "card (or name card)" shape as illustrated in the drawing, or may be an image having various shapes according to the user's selection or the setting of the controller 180 in addition to the illustrated ones.

As illustrated in the drawing, the identification information of the recognized external electronic device or the profile information of the external electronic device user may be output to the image object 210. The identification information or profile information is information related to the external electronic device such as a kind of the recognized external electronic device, a user's name, a contact address, and the like. The identification information or profile information may be received from the external electronic device through the wireless communication unit 110.

As illustrated in the step S420, when an image object is displayed on the display unit, the controller 180 senses (or monitors) a touch gesture to the image object 210 (S430, refer to FIG. 4). In other words, the controller 180 senses a touch gesture to the image object 210, and determines whether the sensed touch gesture satisfies a pairing condition allowing the sensed touch gesture to be paired with the recognized external electronic device.

Here, a touch gesture satisfying the pairing condition may be a drag or slide touch input by which the image object 210 is moved by a preset length of "a" as illustrated in FIG. 5B(a), or may be a drag or slide touch input by which at least part of the image object 210 is moved into a reference region as illustrated in FIG. 5B(b). Furthermore, though not shown in the drawing, the touch gesture may be a touch input corresponding to a preset pattern applied to the image object or a multi-touch input that is touched in a "tap" manner as many as a preset number of times.

Meanwhile, the touch gesture may include a first touch input 310a for touching a position of a region in which the image object 210 is displayed and a second touch input subsequently entered with the first touch input 310a.

The controller 180 can move the image object 210 in a direction corresponding to the second touch input 310b based on the first and the second touch input 310a, 310b to the image object 210.

For example, when a pairing condition allowing pairing with the external electronic device is a touch gesture for moving the image object 210 to a reference region 220 illustrated in FIG. 5A(a), the controller 180 monitors a touch gesture to the image object 210. Then, the controller 180 continuously responds to the monitoring result to move the image object 210 in a direction (310a -> 310b) corresponding to the touch gesture. Then, the controller 180 continuously monitors that the image object 210 is moved to the reference region 220.

Next, as illustrated in FIG. 5B(b), when at least part of the image object 210 is moved onto the reference region 220, the controller 180 controls the wireless communication unit 110 (refer to FIG. 1) to enable data communication with the recognized external electronic device in response to a touch gesture to the image object 210 (S440). In other words, when a touch gesture to the image object 210 satisfies a pairing condition, the controller 180 controls the wireless communication unit 110 to be paired with the recognized external electronic device.

Meanwhile, the controller 180 is able to control the wireless communication unit 110 to be paired with the external electronic device using a different communication protocol from the communication protocol used to recognize the external electronic device, and switch the communication protocol according to a kind of data transmitted and/or received to and/or from the external electronic device.

For example, when voice or image data should be shared with or small capacity data should be exchanged with the external electronic device, the controller 180 may control the wireless communication unit 110 to access to the external electronic device using BT.

Furthermore, when voice, image, video, and other large capacity files are shared with or data is selectively shared with the external electronic device, the controller 180 may control the wireless communication unit 110 to access to the external electronic device using Wi-Fi.

Meanwhile, when a touch gesture to the image object corresponds to a pairing condition and thus the external electronic device and terminal are paired with each other, the controller 180 may move and display the image object 210 onto the reference region 220 as illustrated in FIG. 5A(b).

In other words, the controller 180 may display the image object 210 on a region different from the region displayed prior to being paired, thereby allowing the user to recognize that a current terminal is paired with the external electronic device.

Furthermore, describing a method of moving the image object 210 by the touch gesture in more detail with reference to FIG. 6, the controller 180 changes a shape of the image object 210 in response to a touch gesture to the image object 210 as illustrated in FIG. 6A and 6B. In other words, the controller 180 transforms the shape of the image object 210 according to a direction (310a -> 310b) to which the touch gesture is applied, thereby informing that the terminal responds to a touch gesture to the image object 210, and providing information on the direction of the touch gesture to the user.

For example, when the touch gesture is a first touch input for touching a first position 310a of the image object 210 and a second touch input subsequently entered with the first touch input to be applied to a second position 310b, the controller 180 may transform the shape of the image object 210 based on the second touch input. In other words, the controller 180 can control the display unit 151 in such a manner that at least part of the shape of the image object is extended in a direction corresponding to the movement direction of the second touch input.

Furthermore, as illustrated in FIG. 6C, the controller 180 controls the wireless communication unit 110 (refer to FIG. 1) such that at least part of the image object 210 is located on the reference region or paired with the recognized external electronic device due to the transformation of the image object 210 by the second touch input, namely, a touch gesture containing the second touch input. Furthermore, though not shown in the drawing, when the image object 210 is moved by a preset distance or the image object 210 is extended by a preset length due to the transformation of the image object 210, the controller 180 controls the wireless communication unit 110 to be paired with the recognized external electronic device.

Furthermore, as illustrated in FIG. 6C, when at least part of the image object 210 is located on the reference region 220 by the touch gesture, the controller 180 moves the image object 210 into the reference region 220. Then, the controller 180 may restore the shape of the image object 210 to the shape prior to transformation.

Furthermore, as illustrated in FIG. 6D, when a touch gesture to the image object 210 is terminated (or released) prior to being moved into the reference region, the controller 180 may move the image object 210 to an initial location as illustrated in FIG. 6A.

In this case, the controller 180 determines that a touch gesture to the image object 210 does not satisfies a pairing condition allowing pairing with the external electronic device. Furthermore, the controller 180 may control the wireless communication unit 110 not to perform data communication with the external electronic device until a touch gesture satisfying the pairing condition is applied again to the image object 210.

As described above, a mobile terminal according to the present disclosure may provide a user interface capable of allowing the setting and result of pairing with an external electronic device to be easily recognized in a visual manner using an image object.

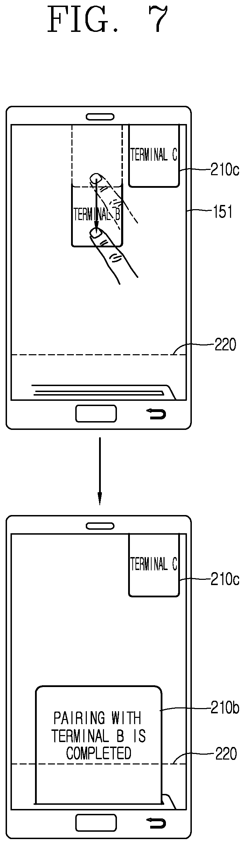

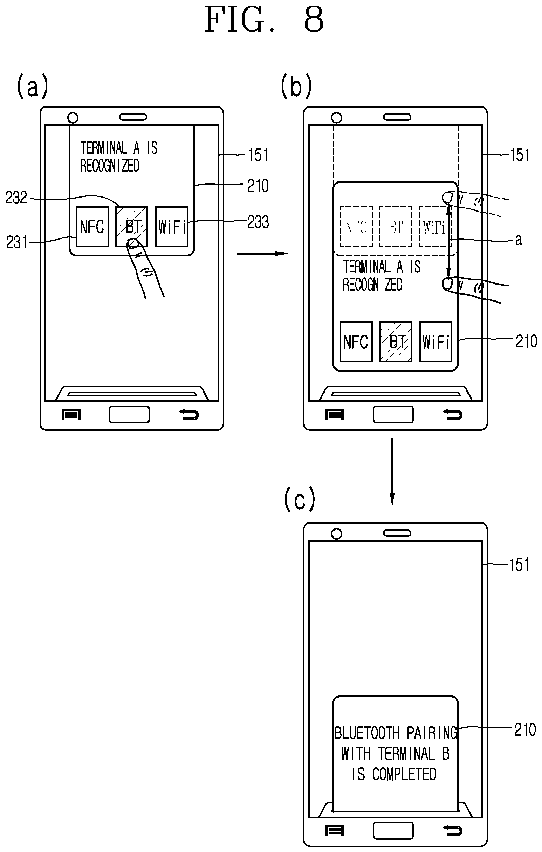

Furthermore, a mobile terminal according to the present disclosure may be allowed to select an external electronic device or select a specific communication protocol through an image object displayed on the display unit. FIGS. 7 and 8 are conceptual views for explaining a method of displaying an image object in a mobile terminal according to an embodiment disclosed in the present disclosure.

First, referring to FIG. 7, a mobile terminal according to the present disclosure is able to recognize a plurality of external electronic devices, and when a plurality of external electronic device are recognized by the wireless communication unit 110, the controller 180 outputs image objects 210a, 210b, 210c corresponding to the recognized plurality of external electronic devices, respectively as illustrated in FIG. 7A.

Furthermore, when a touch gesture satisfying the pairing condition is entered to at least one of the plurality of image objects 210a, 210b, 210c, the controller 180 controls the wireless communication unit 110 to be paired with the external electronic device corresponding to the image object to which the touch gesture is entered. In other words, the controller 180 is able to be paired with a plurality of external electronic devices according to the user's selection.

Meanwhile, as illustrated in FIG. 7B, when a touch gesture satisfying the pairing condition is applied to the second image object 210b among the first, the second, and the third image object 210a, 210b, 210c, the controller 180 controls the wireless communication unit 110 to enable data communication with terminal "B" corresponding to the second image object 210b as illustrated in FIG. 7C.

In other words, when a plurality of external electronic devices are recognized by the wireless communication unit 110, a plurality of image objects 210a, 210b, 210c corresponding to the plurality of external electronic devices are displayed on the display unit 151. Then, when a touch gesture corresponding to the pairing condition is applied to at least one of the plurality of image objects 210a, 210b, 210c, the wireless communication unit 110 is paired with the external electronic device corresponding to an image object to which the touch gesture is applied.

Next, referring to FIG. 8, when there are a plurality of communication schemes capable of allowing the wireless communication unit 110 to perform data communication with an external electronic device, a plurality of icons 231, 232, 233 corresponding to the plurality of communication schemes, respectively, may be displayed on the display unit 151. The plurality of icons 231, 232, 233 may be displayed on the image object 210 as illustrated in the drawing. The controller 180 may allow the user to select any one of the plurality of icons 231, 232, 233 and control the wireless communication unit 110 to be paired with the recognized external electronic device using a communication scheme corresponding to the selected icon 232 as illustrated in FIGS. 8B and 8C.

As described above, a mobile terminal according to the present disclosure may provide a user interface capable of setting a data communication scheme through a simple manipulation using an image object or selecting a plurality of external electronic devices desired to perform data communication.

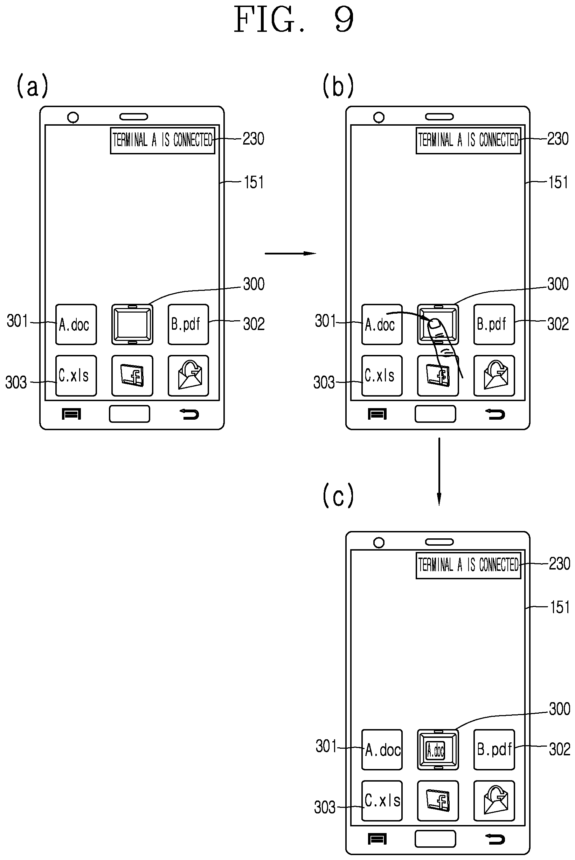

Hereinafter, a method of selecting data to be transmitted to an external electronic device will be described in detail together with the drawing. FIG. 9 is a conceptual view for explaining a method of selecting data to be transmitted in a mobile terminal according to an embodiment disclosed in the present disclosure.

As described above, when paired with an external electronic device using an image object, the mobile terminal according to the present disclosure may be in a state that data communication with the external electronic device is enabled.

The controller 180 may inform the user that data communication with "terminal A" is enabled using a popup window 230 as illustrated in FIG. 9.

Meanwhile, a transmission image (or transmission object, transmission icon, shopping basket image) 300 may be displayed in a region on the display unit 151 of the mobile terminal according to the present disclosure as illustrated in FIG. 9.

The transmission image 300 may be displayed in a region of the home screen or menu page or displayed at the uppermost end while a specific application is being implemented on the terminal. The transmission image 300 performs a role of storing data to be transmitted or allowing the user to recognize the selected data prior to transmitting data to the external electronic device.

For example, as illustrated in FIG. 9B, when first data 301 (or icon of the first application) is dragged onto the transmission image 300 by the user, a thumbnail of the first data may be displayed on the transmission image as illustrated in FIG. 9C.

Furthermore, though not shown in the drawing, when the transmission image 300 is touched to correspond to a preset scheme, the first data 301 dragged to the transmission image 300 may be transmitted to the external electronic device.

Meanwhile, when the first data 301 is an icon corresponding to the application, the controller 180 may transmit data associated with the application corresponding to the first data 301 to the external electronic device. Here, data associated with the application may be an installation file of the application, data stored by the user, or the like.

As described above, a mobile terminal according to the present disclosure may easily select data to be transmitted to an external electronic device using a simple touch input using a transmission image.

Hereinafter, a method of performing data communication with an external electronic device will be described in more detail. Furthermore, as an example, the external electronic device is assumed as a "mobile terminal".

Accordingly, a method of performing data communication between a first terminal and a second terminal will be described below in detail. It is possible to receive a response.

Meanwhile, a mobile terminal for transmitting data to another mobile terminal is referred to as a "first terminal", and a mobile terminal for receiving data transmitted from the "first terminal" is referred to as a "second terminal".

The "first terminal' and "second terminal" may include the configuration of a mobile terminal that has been explained in FIGS. 1, 2A and 2B as described above.

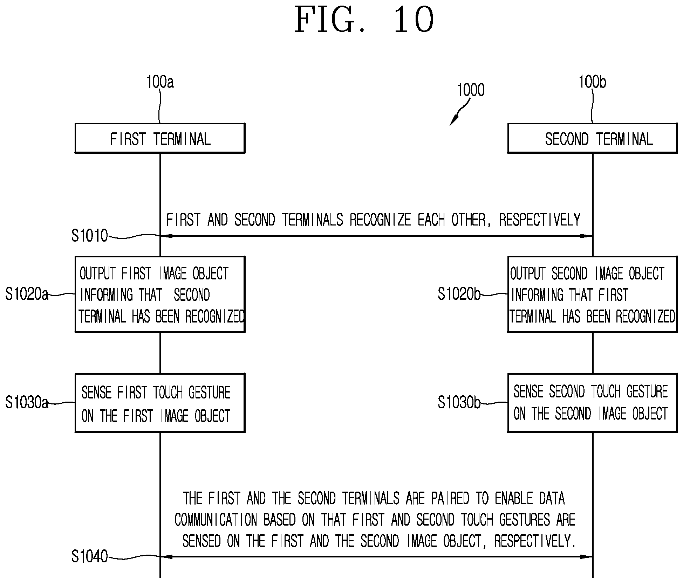

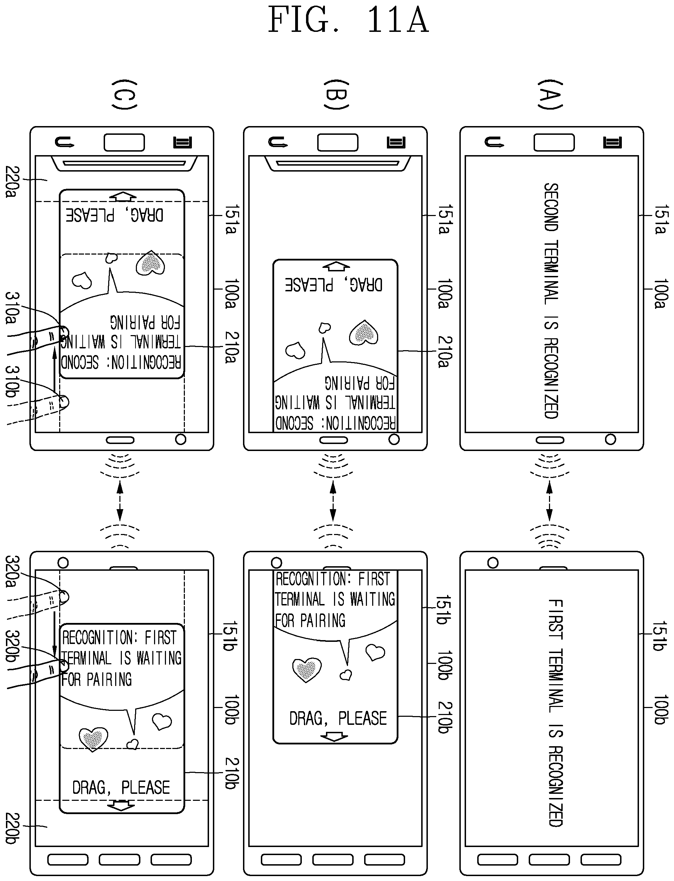

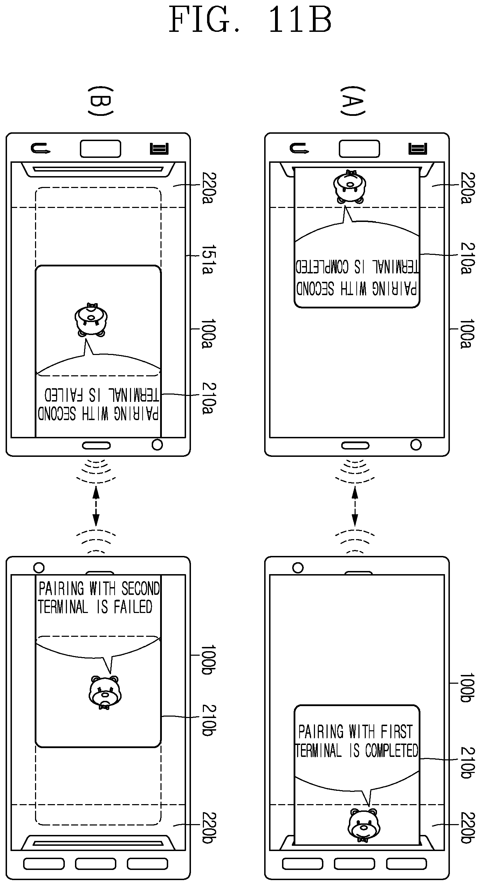

FIG. 10 is a flow chart for explaining a data communication method using a mobile terminal according to an embodiment disclosed in the present disclosure, and FIGS. 11A and 11B are conceptual views illustrating an example of a flow chart for the data communication method illustrated in FIG. 10.

First, a first terminal and a second terminal recognize each other using a wireless signal, respectively (S1010, refer to FIG. 10).

Here, the first and the second terminal are able to recognize each other based on a data communication request message transmitted from any one terminal to another terminal. Furthermore, the first and the second terminal are able to recognize each other by the wireless communication unit contained in each of them.

Next, a first and a second image object are displayed on the first ad the second terminal, respectively, based on that the first and the second terminal recognize each other, respectively (S1020a, S1020b).

For example, when the second terminal 100b is recognized by the first terminal 100a, and the first terminal 100a is recognized by the second terminal 100b as illustrated in FIG. 11 A(a), a first image object 210a indicating that the second terminal 100b has been recognized is displayed on the first terminal 100a as illustrated in FIG. 11A(b). Furthermore, a second image object 210b indicating that the first terminal 100a has been recognized is displayed on the second terminal 100b. (Here, the first and the second image object 210a, 210b have been described together with FIGS. 4, 5A and 5B, and thus the detailed description thereof will be omitted.)

As described above, the first and the second image object 210a, 210b are displayed on the first and the second terminal 100a, 100b (refer to S1010, S1020a, S1020b in FIG. 10), and then whether a first and a second touch gesture are applied to the first and the second image object 210a, 210b, respectively, is sensed (S1030a, S1030b).

In other words, the controller of the first terminal 100a senses whether a first touch gesture is applied to the first image object 210a, and the controller of the second terminal 100b senses whether a second touch gesture is applied to the second image object 210b.

Here, as touch inputs for generating a control command for allowing to be paired with each other, the first and the second touch gesture are touch inputs satisfying a preset pairing condition.

For example, the first and the second touch gesture may be drag or slide touch inputs by which the image object is moved by a preset length of "a", or may be drag or slide touch inputs by which at least part of the image object is moved into a reference region. Furthermore, though not shown in the drawing, the touch gesture may be a touch input corresponding to a preset pattern applied to the image object or a multi-touch input that is touched in a "tap" manner as many as a preset number of times.

Next, as described in the steps S1030a and 1030b, when a first touch gesture is sensed on the first image object 210a and a second touch gesture is sensed on the second image object 210b, the first and the second terminal 100a, 100b are paired with each other to enable data communication (S1040).

For example, when at least part of the first image object 210a is moved onto the first region 220a by a first touch gesture in the first and the second direction 310a, 310b, and in a similar manner, at least part of the second image object 210b is moved onto the second region 220b by a second touch gesture in the first and the second direction 320a, 320b as illustrated in FIG. 11A(c), the first and the second terminal 100a, 100b are paired with each other to enable data communication.

Furthermore, when pairing is allowed between the first and the second terminal 100a, 100b, the first and the second image objects 210a, 210b displayed on both terminals, respectively, may be moved onto the first and the second region 220a, 220b, respectively as illustrated in FIG. 11 B(a). Through this, both terminal users can sense that pairing is successfully carried out between the terminals.

Furthermore, when pairing between the first and the second terminal 100a, 100b is failed, the first and the second image objects 210a, 210b displayed on both the terminals, respectively, may be moved to an initial location as illustrated in FIG. 11 B(b).

Meanwhile, the pairing between the first and the second terminal 100a, 100b may be implemented when the second touch gesture is applied on the second image object 210b at a time point corresponding to a time point when the first touch gesture is applied on the first image object 210a. In other words, the pairing may be implemented when the first and the second touch gesture are applied on the first and the second image objects 210a, 210b at the same time or applied within a range of a preset period of time.

As described above, when the first and the second terminal recognize each other through a wireless signal, image objects are displayed on both the terminals, and both the terminal users can generate a control command for pairing using the image objects.

Accordingly, the users of the mobile terminals according to the present disclosure may enter a separate password, thereby reducing a burden such as allowing pairing between terminals, and the like.

Hereinafter, a method of performing data communication between the first and the second mobile terminal will be described in more detail.

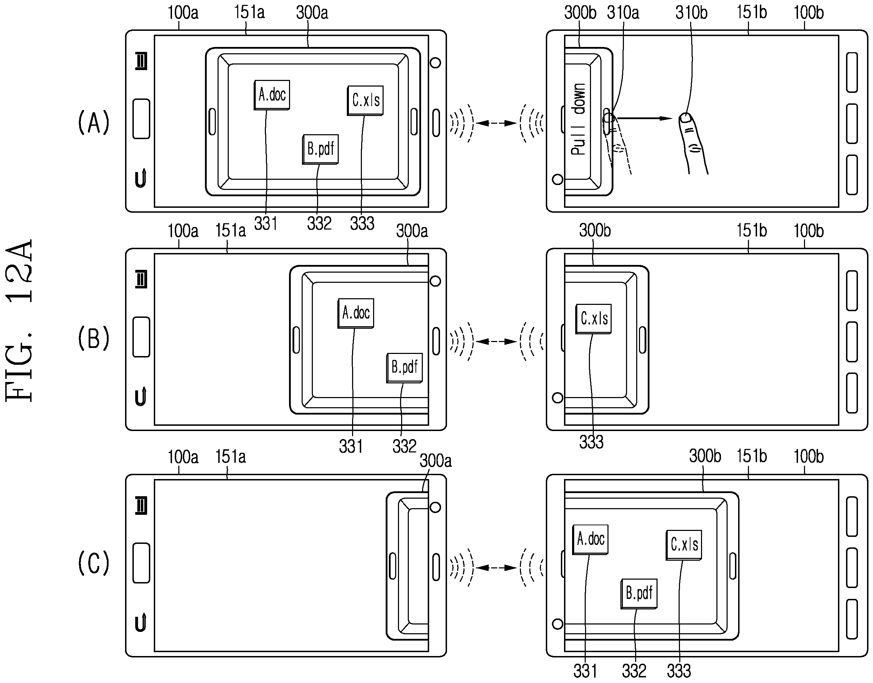

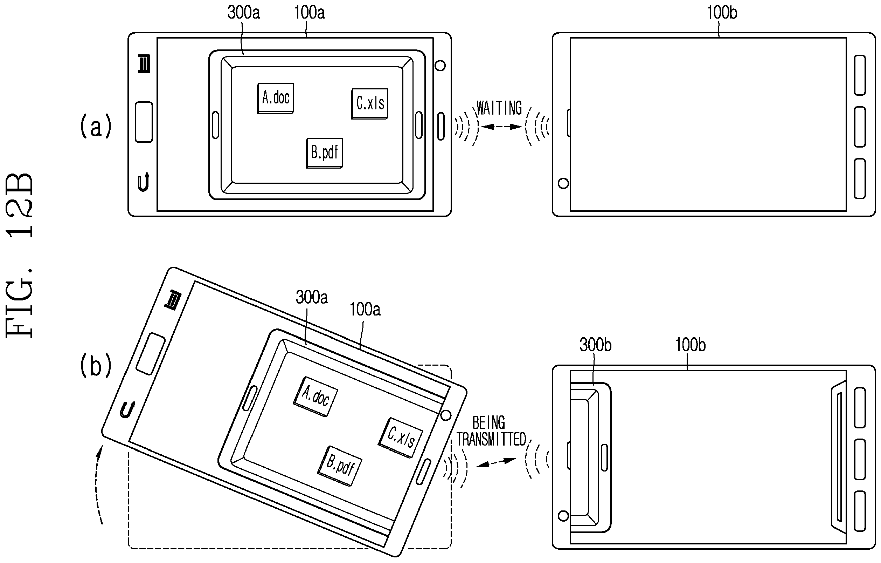

FIGS. 12A and 12B are conceptual views for explaining a method of starting data communication in a data communication method using a mobile terminal according to an embodiment disclosed in the present disclosure.

First, as illustrated in FIGS. 12A and 12B(a), when data to be transmitted to the second terminal 100b is selected by the first terminal 100a, icons 331, 332, 333 corresponding to the selected data, respectively, may be displayed on the display unit 151a of the first terminal 100a.

Here, data to be transmitted from the first terminal 100a to the second terminal 100b may be selected as previously illustrated in FIG. 9, or selected through a specialized application for data transmission, or selected using other various methods.

Meanwhile, when a control command for transmitting the selected data to the second terminal 100b is applied, the selected data starts to be transmitted to the second terminal 100b.

Here, a control command for transmitting data to the second terminal 100b may be generated by dragging a first image 310a displayed on the second terminal 100b in a preset direction (310a -> 310b), or dragging it by a preset length, or moving it into a preset region as illustrated in FIG. 12A(a).

In other words, here, a control command for transmitting the selected data may be generated from the second terminal 100b, and in this case, the first terminal 100a, may first transmit a ready signal for informing that data to be transmitted to the second terminal 100b has been prepared.

Then, the first image 310a may be displayed on the display unit 151b of the second terminal 100b based on the ready signal received from the first terminal 100a.

Meanwhile, as illustrated in FIG. 12A(a), when data transmission is allowed due to a touch input to the first image 310a, the first terminal 100a transmits data to the second terminal 100b. Then, icons (or images) 331, 332, 333 corresponding to the transmitted data may be displayed on the display unit 151b of the second terminal 100b in response to data being transmitted from the first terminal 100a as illustrated in FIGS. 12A(b) and 12A(c).

Similarly, icons (or images) 331, 332 corresponding to the data transmitted to the second terminal 100b may be not displayed any more on the display unit 151a of the first terminal 100a as illustrated in FIGS. 12A(b) and 12A(c).

As described above, the display of an icon may be changed on both the display unit of the terminals as data is transmitted, thereby informing the users that data communication is being progressed.

Furthermore, a control command for transmitting data from the first terminal 100a to the second terminal 100b may be generated by inclining the first terminal 100a. In other words, as illustrated in FIG. 12B(a), when the first terminal 100a is inclined by a predetermined angle, the first and the second terminal 100a, 100b starts to transmit data to the first and the second terminal 100a, 100b.

The controller of the first terminal 100a may recognize the movement or location of the first terminal 100a using a movement sensor (not shown) mounted therein. The movement sensor may include at least one of a terrestrial magnetism sensor, a gyro sensor, and an acceleration sensor.

The terrestrial magnetism sensor is a sensor for detecting a direction and size of terrestrial magnetism, and generating an electrical signal using the same. The gyro sensor is a sensor for detecting a rotation speed of the body, and generating an electrical signal using the same. The acceleration sensor is a sensor for detecting an acceleration change in any one direction, and generating an electrical signal using the same.

Accordingly, the movement sensor may sense whether or not the body is rotated. In other words, the movement sensor may detect a displacement based on the rotation of the body, namely, rotation direction and rotation angle, and generate an electrical signal using the same. Similarly, when the movement of the body is sensed by the movement sensor, the controller of the first terminal 100a starts data transmission to the second terminal 100b. Furthermore, the controller of the first terminal 100a may grasp a relative location between the second terminal 100b and the first terminal 100a, and generate a control command for starting data transmission when the terminal 100 is inclined or moved toward the second terminal 100b.

Meanwhile, a control command for starting data transmission from the first terminal to the second terminal may be generated in various ways in addition to the foregoing methods.

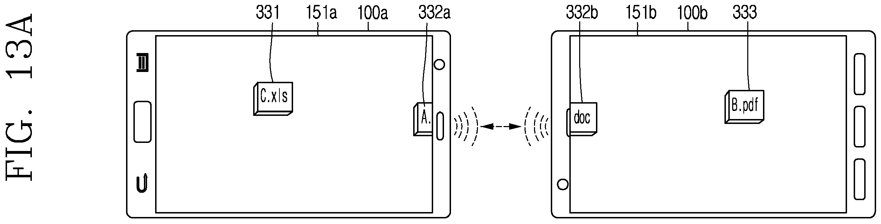

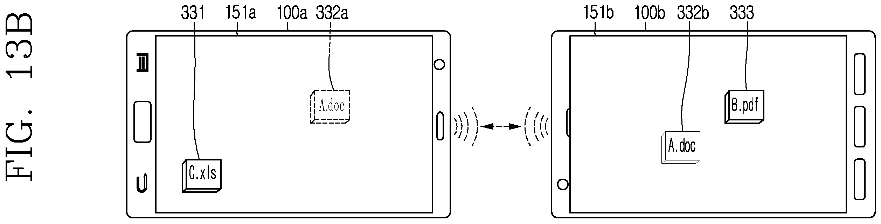

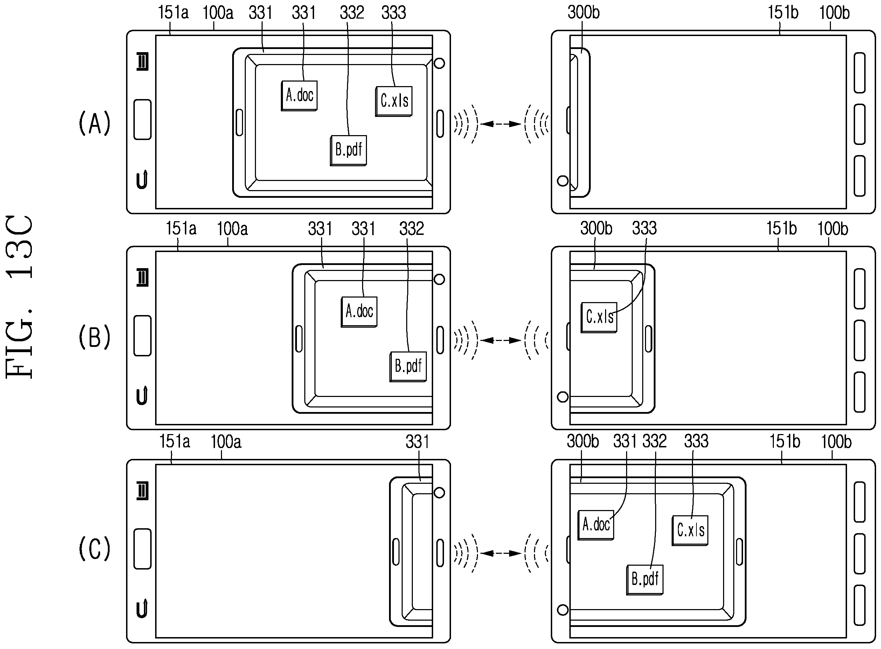

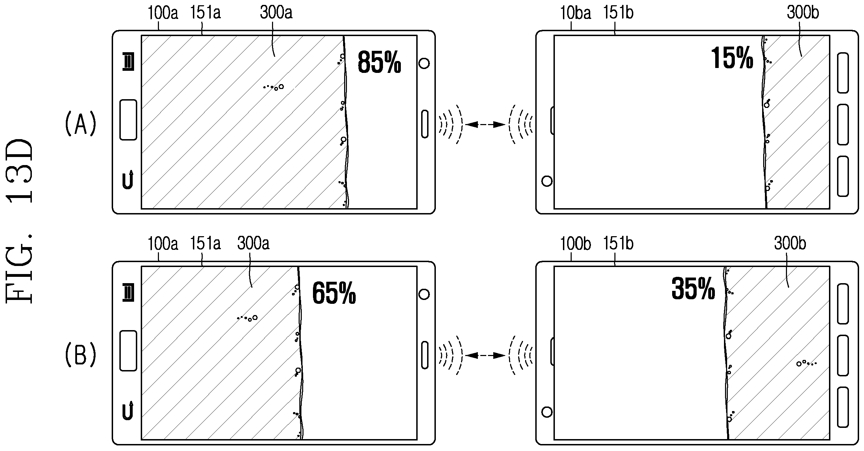

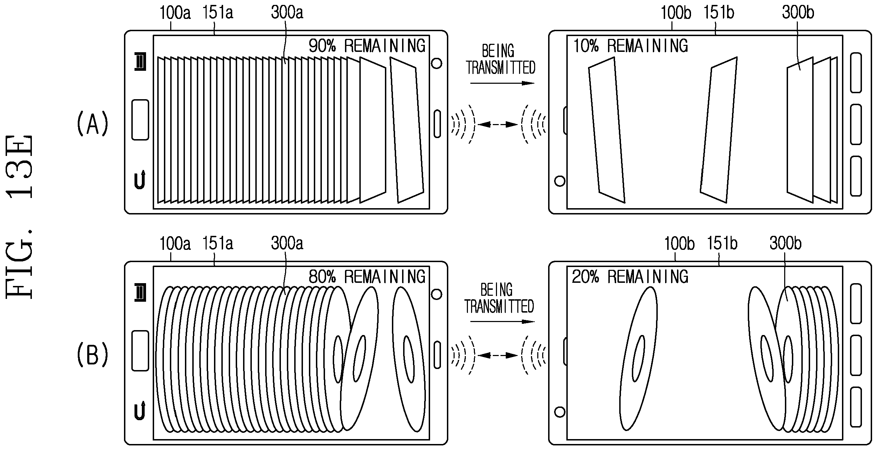

Hereinafter, a method of displaying a transmission state of data on both the terminals based on data being transmitted from the first terminal to the second terminal will be described. FIGS. 13A, 13B, 13C, 13D and 13E are conceptual views for explaining a method of displaying a screen during data transmission in a mobile terminal according to an embodiment disclosed in the present disclosure.

If data is transmitted from either one terminal to another terminal when transmitting data using a mobile terminal according to an embodiment of the present disclosure, then at least one of both the terminals can output transmission information associated with at least one of the transmission speed and transmission amount of the data being transmitted using at least one of the sound and icon.

The transmission information may be displayed through a change of at least one of the transparency, display range and display location of an icon displayed on the display unit.

For example, as illustrated in FIG. 13A, icons 331, 332a corresponding to data to be transmitted from the first terminal 100a to the second terminal 100b may be displayed on the display unit 151a of the first terminal 100a, and icons 332b, 333 corresponding to data to be transmitted from the first terminal 100a to the second terminal 100b may be displayed on the display unit 151b of the second terminal 100b.

Furthermore, the icons 332a, 322b of data corresponding to "A.doc" may be partially displayed on the first and the second terminal 100a, 100b based on the transmitted amount.

For another example, as illustrated in FIG. 13B, the icon 332a corresponding to data to be transmitted from the first terminal 100a to the second terminal 100b may be displayed on the display unit 151a of the first terminal 100a, and then the transparency thereof may be gradually decreased (or increased) based on the transmission amount. On the contrary, when data is transmitted from the first terminal 100a, the icon 332b corresponding to data that has been transmitted from the first terminal 100a to the second terminal 100b may be transparent at the initial stage and then displayed in a gradually darkening manner as increasing the transmission amount of data.

Furthermore, as illustrated in FIG. 13C(a), 13C(b) and 13C(c), a tray image 311 and icons 331, 332, 333 corresponding to data displayed on the first terminal 100a may be displayed in a manner of being moved to the second terminal 100b. In other words, the controller of the first terminal 100a may control the display unit 151a such that the display of the tray image 311 and icons 331, 332, 333 are gradually disappeared with reference to an amount of data being transmitted and data that has been transmitted to the second terminal 100b.

Furthermore, the controller of the second terminal 100b1 may control the display unit 151b such that the display of the tray image 300b and icons 331, 332, 333 are gradually displayed with reference to an amount of data being received and data that has been transmitted from the first terminal 100a.

In other words, an icon of data displayed on the display unit 151a of the first terminal 100a is gradually disappeared based on a level of data being transmitted to the second terminal 100b. Furthermore, an icon of the data being transmitted from the first terminal 100a is gradually displayed on the display unit 151b of the second terminal 100b in interlock with the icon being gradually disappeared on the display unit of the first terminal 100a.

Meanwhile, as described above, referring to FIGS. 13A, 13B and 13C, the controller of the first terminal 100a may control the display unit 151a such that an icon displayed on the first terminal 100a is quickly moved in a preset direction or quickly disappeared as the transmission speed of data is fast. Furthermore, the controller of the first terminal 100a may control the volume of a sound effect or control the length of output time of a sound effect based on the transmission speed of data. Similarly, the controller of the second terminal 100b may also control the speed of moving an icon or the level of displaying an icon based on the speed of data being received from the first terminal 100a, and control the volume and the length of output time of a sound effect.

Furthermore, when the transmission of data to the second terminal 100b is completed, the controller of the first terminal 100a may output information indicating that data transmission has been completed using vibration and sound.

Furthermore, as illustrated in FIGS. 13D and 13E, various images may be gradually disappeared or gradually displayed on the display unit 151a, 151b of the first and the second terminal 100a, 100b, thereby allowing them to correspond to the transmission amount and transmission speed of data based on data being transmitted. The image may be an image corresponding to a kind of data being transmitted as illustrated in FIGS. 13E(a) and 13E(b). For example, when data associated with "text" is transmitted as illustrated in FIG. 13E(a), text images may be displayed on both the terminals, and when data associated with "music" is transmitted, music disc images may be displayed on both the terminals as illustrated in FIG. 13E(b).

As mentioned above, a method of displaying the transmission speed and transmission amount of data to both the terminals based on data being transmitted has been described.

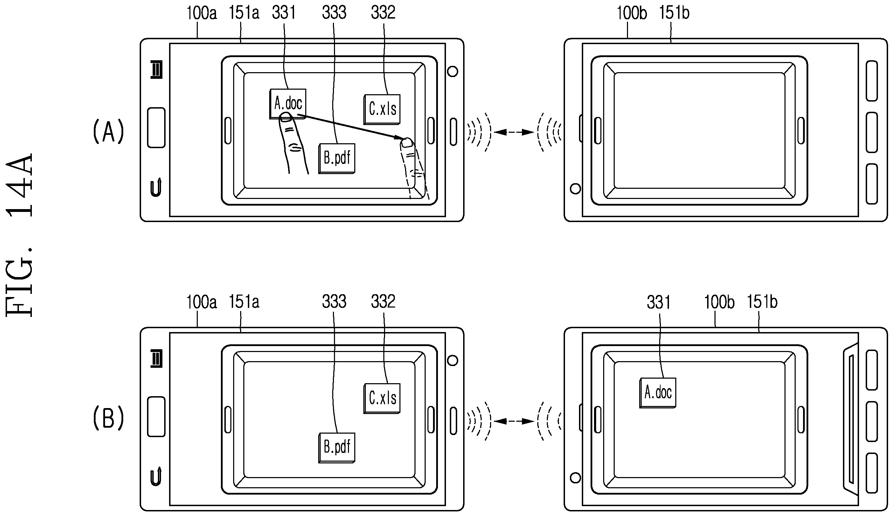

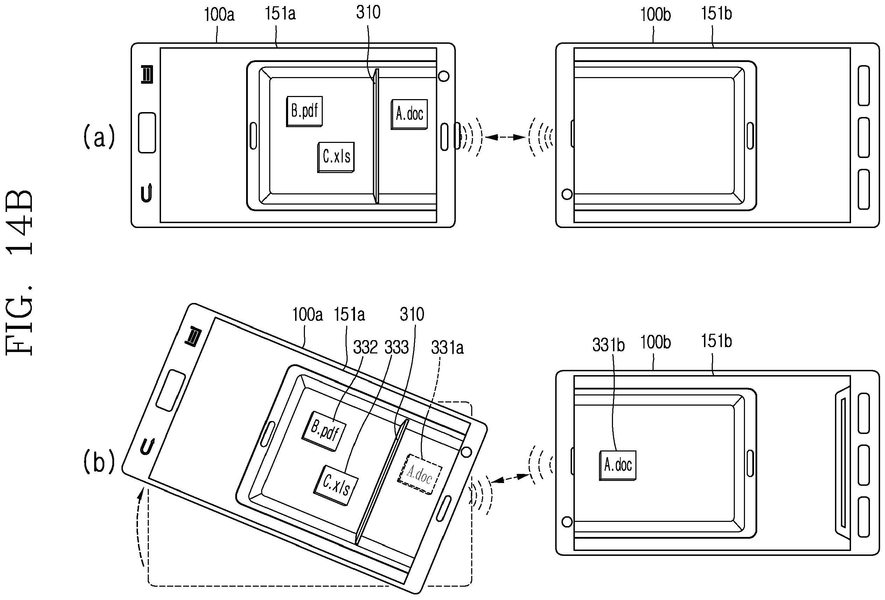

Hereinafter, a method of selecting data to be preferentially transmitted to the second terminal among a plurality of data when there are a plurality of data desired to be transmitted from the first terminal to the second terminal will be described. FIGS. 14A and 14B are conceptual views for explaining a method of transmitting data by setting a priority in a mobile terminal according to an embodiment disclosed in the present disclosure.

First, as illustrated in FIG. 14A(a), if any one of a plurality of icons 331, 332, 333 corresponding to a plurality of data, respectively, is dragged in a preset direction when there are a plurality of data to be transmitted from the first terminal 100a to the second terminal 100b, then the controller of the first terminal 100a may preferentially transmit data corresponding to the dragged icon 331 rather than the other data to the second terminal 100b.

In other words, the controller of the first terminal 100a, as illustrated in FIG. 14A(b), preferentially transmit data corresponding to the dragged icon 331 rather than the other data. Furthermore, for a method of setting a priority for data in the first terminal 100a, it may be possible to drag or slide an icon as described above, including various setting methods such as using a single or double touch.

Furthermore, as illustrated in FIG. 14B(a), an image 310 for dividing them into data being transmitted and data not being transmitted may be displayed on the display unit 151a of the first terminal 100a.

Furthermore, as illustrated in FIG. 14B(b), the first terminal 100a may transmit data corresponding to the icon 331a located in a direction to which the terminal is inclined to the second terminal 100b based on the image 310.

For another example, the first terminal 100a may output data corresponding to the icon 331a contained in any one region based on the image 310 to the second terminal 100b even if the terminal is not inclined.

As described above, in a mobile terminal according to the present disclosure, it may be possible to transmit data by determining a priority for them when a plurality of data are selected, as well as to divide them into data to be transmitted and data not to be transmitted even when a plurality of data is selected.

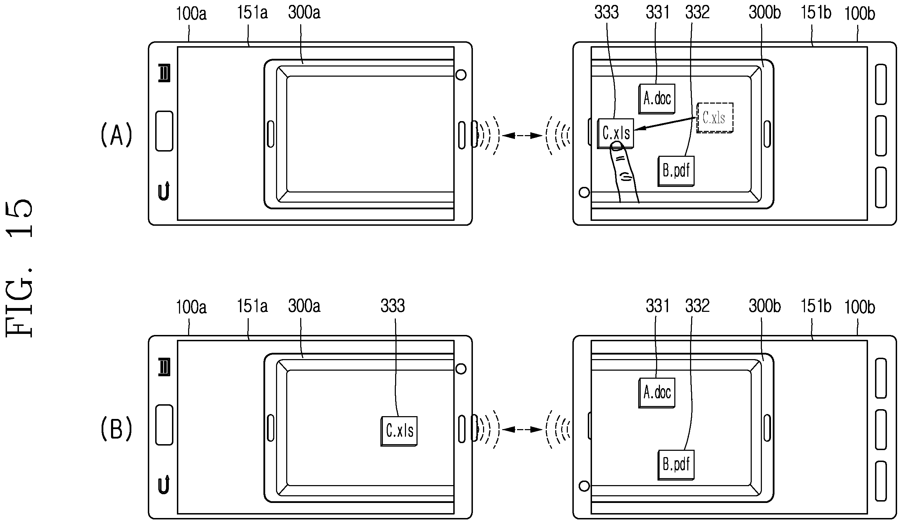

Furthermore, as illustrated in FIG. 15A, when data is transmitted from the first terminal 100a to the second terminal 100b, the user of the second terminal 100b may apply a touch input to generate a control command for rejecting the reception of at least one (for example, refer to reference numeral 333) of data that has been transmitted.

For example, when at least one 333 of the icons 331, 332, 333 corresponding to data transmitted to the second terminal 100b is touched, or dragged or slid in a predetermined direction, the controller of the second terminal 100b may remove data corresponding to the at least one, and transmit a signal therefor to the first terminal 100a.

Then, the controller of the first terminal 100a may display the icon 333 corresponding to the rejected data based on the signal received from the second terminal 100b as illustrated in FIG. 15B, thereby allowing the user of the first terminal 100a to recognize data removed from the second terminal 100b.

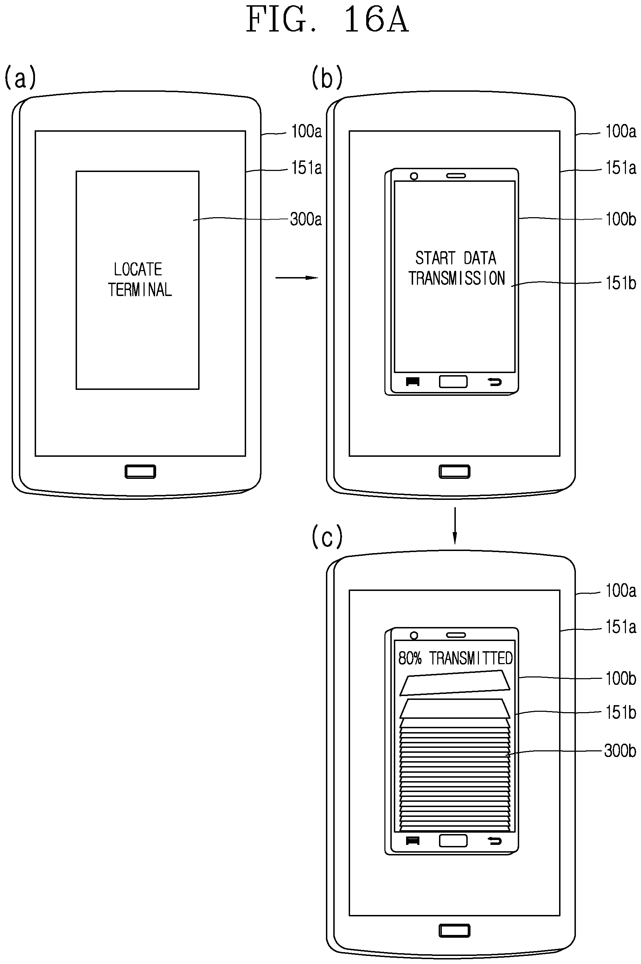

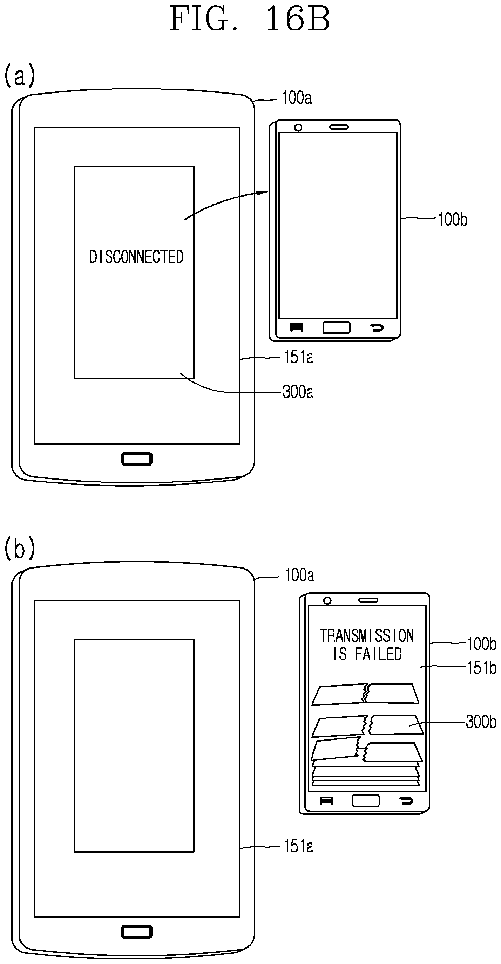

Meanwhile, when the first and the second terminal are paired with each other through Near Field Communication (NFC) and thus data communication can be carried out only when they should be located near to each other, screens displayed on both the terminals will be described. FIGS. 16A and 16B are conceptual views for explaining a method of displaying a screen for data transmission in a data communication method using a mobile terminal according to an embodiment disclosed in the present disclosure.

First, when the first and the second terminal 100a, 100b are paired with each other through near field communication, a region 300a for locating the second terminal 100b may be displayed on the display unit 151a of the first terminal 100a as illustrated in FIG. 16A(a).

In other words, the first terminal 100a outputs guidance information for allowing the second terminal 100b to be close to the second terminal 100b for stable data communication.

Furthermore, as illustrated in FIG. 16A(b), when the second terminal 100b is located in the region 300a, the controller of the first terminal 100a senses the second terminal 100b using a pressure sensor or the like, and starts data communication to the second terminal 100b. Meanwhile, the controller of the second terminal 100b may display transmission information 300b for allowing the user to recognize a data communication state with the first terminal 100a on the display unit 151b as illustrated in FIG. 16A(c).

Meanwhile, as illustrated in FIG. 16B(a), when the second terminal 100b is separated from the region 300a, namely, the first terminal 100a, by equal to or more than a reference distance while transmitting data, data communication between the first and the second terminal may be suspended or the pairing may be released. In this case, information 300b for informing that data transmission has been released may be displayed on at least one of the first and the second terminal 100a, 100b.

As described above, a mobile terminal according to the present disclosure may output guidance information for allowing both terminals to be close to each other, thereby guiding data communication to be stably implemented between both terminals according to the communication method.

When an external electronic device capable of data communication is recognized, a mobile terminal according to an embodiment of the present disclosure and a data communication method using the same may display an image indicating this, and generate a pairing control command based on the user's touch input for the displayed image. Accordingly, the user can control pairing only with a simple manipulation for the image, and thus it is not required to change the setting of the terminal in a complicated manner.

Furthermore, when data communication is carried out between a plurality of terminals, a mobile terminal according to an embodiment of the present disclosure and a data communication method using the same may display information associated with the transmission amount, transmission speed, and the like, of data on a plurality of terminals at the same time. Accordingly, the user can easily grasp a data communication state between a plurality of terminals through progressive state information displayed on the terminal.

The configurations and methods according to the above-described embodiments will not be applicable in a limited way to the foregoing mobile terminal, and all or part of each embodiment may be selectively combined and configured to make various modifications thereto.

## Claims

1. A data communication method comprising a first and a second terminal capable of data communication using a wireless signal, the method comprising:
allowing the first and the second terminals to recognize each other, respectively;
outputting a first and a second image objects, on respective display units of the first and the second terminals, respectively, based on that the first and the second terminals recognize each other, respectively; and
generating respective control commands allowing the first and the second terminal to be paired with each other to enable short range data communication when a first and a second touch gesture are applied to the first and the second image object, respectively;
outputting an icon corresponding to a selected data on the display unit of the first terminal when at least one data to be transmitted to the second terminal is selected by the first terminal in a state that the short range data communication between the first and the second terminal is enabled;
transmitting, via a wireless communication unit of the first terminal, a ready signal informing that data to be transmitted to the second terminal has been prepared before transmitting the data to the second terminal; **characterised by**
outputting an image, in response to the ready signal being received from the first terminal, on the display unit of the second terminal;
transmitting, via the wireless communication unit of the first terminal, the selected data from the first terminal to the second terminal if a predetermined touch input applied to the image displayed on the display unit of the second terminal; and,
receiving, via a wireless communication unit of the second terminal, the selected data transmitted from the first terminal,
wherein the icon displayed on the display unit of the first terminal is gradually disappeared based on a transmitted amount of the selected data,
wherein an icon corresponding to the selected data is gradually displayed on the display unit of the second terminal based on a received amount of the selected data.

2. The data communication method of claim 1, wherein the first and the second touch gesture are touch inputs for moving the first and the second image object, respectively, in a preset direction by a reference length or moving at least part of the first and the second image object into a reference region.

3. The data communication method of claim 2, wherein the pairing is implemented when the first and the second touch gestures are applied on the first and the second image objects within a range of a preset period of time.

4. The data communication method of claim 1, wherein when at least one data to be transmitted to the second terminal is selected by the user at the first terminal, icons corresponding to the selected data, respectively, are output on the display unit of the first terminal, and when a control command for transmitting the selected data to the second terminal is applied, the transmission of the selected data is started, and an icon corresponding to the transmitted data is displayed on the display unit of the second terminal in response to the selected data being transmitted from the first terminal.

5. The data communication method of claim 2, wherein when pairing between the first and the second terminal is failed, the first and second image objects displayed on both first and second terminals, are moved to an initial location.

## Patentansprüche

1. Datenkommunikationsverfahren, das ein erstes und ein zweites Endgerät aufweist, die zu einer Datenkommunikation unter Verwendung eines drahtlosen Signals fähig sind, wobei das Verfahren aufweist:
Ermöglichen, dass die ersten und zweiten Endgeräte sich gegenseitig erkennen;
jeweils Ausgeben erster und zweiter Bildobjekte auf jeweiligen Anzeigeeinheiten der ersten und der zweiten Endgeräte basierend darauf, dass die ersten und zweiten Endgeräte einander jeweils erkennen; und
Erzeugen jeweiliger Steuerbefehle, die ermöglichen, dass das erste und das zweite Endgerät miteinander gepaart werden, um eine kurzreichweitige Datenkommunikation zu ermöglichen, wenn eine erste und eine zweite Berührungshandbewegung jeweils auf das erste und das zweite Bildobjekt angewendet werden;
Ausgeben eines Piktogramms, das einem ausgewählten Datenposten entspricht, auf der Anzeigeeinheit, wenn von dem ersten Endgerät in einem Zustand, in dem die kurzreichweitige Datenkommunikation zwischen dem ersten und dem zweiten Endgerät aktiv ist, wenigstens ein Datenposten, der an das zweite Endgerät übertragen werden soll, ausgewählt wird;
Übertragen eines Bereitschaftssignals über eine drahtlose Kommunikationseinheit des ersten Endgeräts, welches darüber informiert, dass Daten, die an das zweite Endgerät übertragen werden sollen, erzeugt wurden, bevor die Daten an das zweite Endgerät übertragen werden;
**gekennzeichnet durch**:
ansprechend darauf, dass das Bereitschaftssignal von dem ersten Endgerät empfangen wird, Ausgeben eines Bilds auf der Anzeigeeinheit des zweiten Endgeräts;
Übertragen der ausgewählten Daten von dem ersten Endgerät über die drahtlose Kommunikationseinheit des ersten Endgeräts an das zweite Endgerät, wenn eine vorgegebene Berührungseingabe auf das Bild angewendet wird, das auf der Anzeigeeinheit des zweiten Endgeräts angezeigt wird; und
Empfangen der ausgewählten Daten, die von dem ersten Endgerät übertragen werden, über eine drahtlose Kommunikationseinheit des zweiten Endgeräts,
wobei das auf der Anzeigeeinheit des ersten Endgeräts angezeigte Piktogramm basierend auf einer übertragenen Menge der ausgewählten Daten allmählich verschwindet,
wobei ein Piktogramm, das den ausgewählten Daten entspricht, basierend auf einer empfangenen Menge der ausgewählten Daten allmählich auf der Anzeigeeinheit des zweiten Endgeräts angezeigt wird.

2. Datenkommunikationsverfahren nach Anspruch 1, wobei die erste und die zweite Berührungshandbewegung Berührungseingaben sind, um jeweils das erste und das zweite Bildobjekt um eine Referenzlänge in eine vorgegebene Richtung zu verschieben oder wenigstens einen Teil des ersten und des zweiten Bildobjekts in einen Referenzbereich zu verschieben.

3. Datenkommunikationsverfahren nach Anspruch 2, wobei die Paarung implementiert wird, wenn die ersten und zweiten Berührungshandbewegungen innerhalb eines vorgegebenen Zeitdauerbereichs auf die ersten und zweiten Bildobjekte angewendet werden.

4. Datenkommunikationsverfahren nach Anspruch 1, wobei, wenn von dem Benutzer an dem ersten Endgerät wenigstens ein Datenposten, der an das zweite Endgerät übertragen werden soll, ausgewählt wird, jeweils Piktogramme, die den ausgewählten Daten entsprechen, auf der Anzeigeeinheit des ersten Endgeräts ausgegeben werden, und wenn ein Steuerbefehl zum Übertragen der ausgewählten Daten an das zweite Endgerät angewendet wird, die Übertragung der ausgewählten Daten begonnen wird, und ansprechend auf die Übertragung der ausgewählten Daten von dem ersten Endgerät ein Piktogramm, das den übertragenen Daten entspricht, auf der Anzeigeeinheit des zweiten Endgeräts angezeigt wird.

5. Datenkommunikationsverfahren nach Anspruch 2, wobei, wenn die Paarung zwischen dem ersten Endgerät und dem zweiten Endgerät fehlschlägt, die ersten und zweiten Bildobjekte, die auf den ersten und zweiten Endgeräten angezeigt werden, in eine Anfangsposition verschoben werden.

## Revendications

1. Procédé de communication de données comprenant un premier et un deuxième terminal capable de communication de données en utilisant un signal sans fil, le procédé comprenant :
le fait de permettre aux premier et deuxième terminaux de se reconnaître respectivement entre eux ;
la fourniture en sortie d'un premier et d'un deuxième objet d'image, respectivement sur des unités d'affichage respectives des premier et deuxième terminaux, sur la base du fait que les premier et deuxième terminaux se reconnaissent respectivement entre eux ; et
la génération d'instructions de commande respectives permettant aux premier et deuxième terminaux d'être appariés entre eux pour activer une communication de données de courte portée quand un premier et un deuxième geste de toucher sont appliqués respectivement au premier et au deuxième objet d'image ;
la fourniture en sortie d'une icône correspondant à une donnée sélectionnée sur l'unité d'affichage du premier terminal quand au moins une donnée à transmettre au deuxième terminal est sélectionnée par le premier terminal dans un état où la communication de données de courte portée entre le premier et le deuxième terminal est activée ;
la transmission, par le biais d'une unité de communication sans fil du premier terminal, d'un signal d'état prêt informant que des données à transmettre au deuxième terminal ont été préparées avant la transmission des données au deuxième terminal ;
**caractérisé par**
la fourniture en sortie d'une image, en réponse au signal d'état prêt étant reçu à partir du premier terminal, sur l'unité d'affichage du deuxième terminal ;
la transmission, par le biais d'une unité de communication sans fil du premier terminal, des données sélectionnées du premier terminal au deuxième terminal si une entrée tactile prédéterminée est appliquée à l'image affichée sur l'unité d'affichage du deuxième terminal ; et
la réception, par le biais d'une unité de communication sans fil du deuxième terminal, des données sélectionnées transmises à partir du premier terminal,
dans lequel l'icône affichée sur l'unité d'affichage du premier terminal est commandée pour disparaître progressivement sur la base d'une quantité transmise des données sélectionnées,
dans lequel une icône correspondant aux données sélectionnées est progressivement affichée sur l'unité d'affichage du deuxième terminal sur la base d'une quantité reçue des données sélectionnées.

2. Procédé de communication de données selon la revendication 1, dans lequel le premier et le deuxième geste de toucher sont des entrées tactiles pour déplacer respectivement le premier et le deuxième objet d'image, dans une direction prédéfinie d'une longueur de référence ou déplacer au moins une partie du premier et du deuxième objet d'image dans une région de référence.

3. Procédé de communication de données selon la revendication 2, dans lequel l'appariement est mis en oeuvre quand les premier et deuxième gestes de toucher sont appliqués sur les premier et deuxième objets d'image dans une plage d'une période de temps prédéfinie.

4. Procédé de communication de données selon la revendication 1, dans lequel, quand au moins une donnée à transmettre au deuxième terminal est sélectionnée par l'utilisateur au niveau du premier terminal, des icônes correspondant respectivement aux données sélectionnées sont délivrées en sortie sur l'unité d'affichage du premier terminal et, quand une instruction de commande pour transmettre les données sélectionnées au deuxième terminal est appliquée, la transmission des données sélectionnées est démarrée, et une icône correspondant aux données transmises est affichée sur l'unité d'affichage du deuxième terminal en réponse aux données sélectionnées qui sont transmises à partir du premier terminal.

5. Procédé de communication de données selon la revendication 2, dans lequel, quand l'appariement entre le premier et le deuxième terminal échoue, les premier et deuxième objets d'image affichés à la fois sur les premier et deuxième terminaux sont déplacés dans une position initiale.
